# EUROPEAN PATENT SPECIFICATION

(11) **EP 4 526 186 B1**
(45) Date of publication and mention of the grant of the patent: **13.05.2026**
(21) Application number: 23719908.8
(22) Date of filing: 07.03.2023
(51) Int. Cl.: B62D 25/16, B60R 9/06, B60R 11/06

(54) **DEVICE TO FIX ACCESSORIES TO THE CHASSIS OF HEAVY VEHICLES BY AN INDENTED TUBE AND AT LEAST ONE CLEVIS**
VORRICHTUNG ZUR BEFESTIGUNG VON ZUBEHÖRTEILEN AM CHASSIS VON SCHWERFAHRZEUGEN MIT EINEM GEKERBTEN ROHR UND MINDESTENS EINEM GABELKOPF
DISPOSITIF POUR FIXER DES ACCESSOIRES AU CHÂSSIS DE VÉHICULES LOURDS EN UTILISANT UN TUBE DENTELÉ ET AU MOINS UN OEILLET

(30) Priority: 17.05.2022 IT 202200002021 U
(43) Date of publication of application: 26.03.2025
(73) Proprietor: BAWER S.P.A., 75100 Matera (MT) (IT)
(72) Inventor: LORUSSO, Pasquale, 70022 ALTAMURA (IT); SARDONE, Agostino, 70022 ALTAMURA (IT)
(74) Representative: Russo, Dimitri
(86) International application number: PCT/IT2023/050063
(87) International publication number: WO 2023/223366

(56) References cited:
- EP-A1- 1 209 067
- WO-A1-2010/123414
- CN-A- 115 140 191
- CN-U- 212 099 079

## Description

The invention being the object of the present utility model relates to a device consisting of a toothed tube and one or more clevises, suitable to quickly hook equipped accessories to heavy vehicles, such as for example plastic toolboxes, fenders, and any product to be constrained to the chassis of a vehicle to be mounted.

The accessories heavy vehicles are provided with are generally constrained to the chassis by metal brackets by means of bolted connections and such brackets are made in various formats and sizes, depending on the accessory to be constrained.

The metal brackets used to constrain the equipped accessories to the vehicle bodies, in addition to being heavy and accordingly increasing the load of vehicle sprung masses, involve installation procedures not always short and easy to perform.

A drawback of the metal brackets used to constrain the equipped accessories to the chassis of heavy vehicles is for example represented by their cost, due to their manufacturing cycle, notoriously longer and more expensive than moulding a plastic element, as in the case of the invention.

A further drawback of the known metal brackets suitable to constrain the equipped accessories is represented in that they are subjected to corrosion phenomena over time and in order to overcome such drawback, they are treated with methods that can avoid oxidation processes.

EP 1 209 067 Al discloses a device, suitable to constrain accessories to the chassis of heavy vehicles, similar to the preamble of claim 1.

The invention being the object of the present utility model represents a performing evolution of the system for hooking accessories to the chassis of heavy vehicles, due to the reduction of the number of components required to hook to only one single plastic tubular element constrained to one or more clevises and the latter equipped with a pair of plastic screws and a pair of flanged nuts.

An object of the invention is also to provide a device suitable to constrain equipped accessories to the chassis of a vehicle in a simple and quick manner, said objective being achieved in order to facilitate a general constructor in mounting, having to perform only simple holes on the accessory to be installed, in order to constrain thereto one or more clevises, already arranged to be constrained on a toothed tube, made integral with the vehicle chassis by means of a single simple screw.

Another object of the invention is to provide a supporting element, for the equipped accessories, of a plastic type and suitable to support the same loads as the conventional heavier metal brackets, said objective being achieved by adopting structural ribs, radially disposed on the entire inner circumference of the toothed tube.

An advantage of the invention is to have made an economic and eco-friendly product, with respect to the known metal elements used to constrain the equipped elements of heavy vehicles to the vehicle chassis, still for being made of a plastic material by moulding processes.

A further advantage of the invention is to have made a particularly lightweight supporting element, for the equipped accessories of heavy vehicles, in order not to increase the vehicle sprung masses as all the elements composing the invention are made of a high-resistance plastic material.

Another advantage of the invention is to use the toothed tubular element and the respective clevises, in order to constrain different families of accessories to the chassis of heavy vehicles.

These and further objects are achieved by the device suitable to fix accessories to the chassis of heavy vehicles by a toothed tube and at least one clevis of the present utility model, described in a preferred non-limiting embodiment of further developments within the scope of the model, with the aid of the attached drawings illustrating the following figures:
Fig. 1, an isometric view of the device applied on the surface of a general accessory;
Fig. 2, an exploded isometric view of the device;
Fig. 3, an exploded and partial isometric view of the device as seen from the base of the tubular element ready to be constrained on a body portion;
Fig. 4a, 4b, an isometric view of a clevis, with the elements generating the condition of constraining to the toothed tube.

In the attached figures, the device suitable to fix accessories to the chassis of heavy vehicles by a toothed tube and at least one clevis, for the sake of simplicity hereinafter identified as the device 1 and preferably made of a high-resistance plastic material, is depicted.

As illustrated in the attached figures, the device 1 consists of a tubular element 2, at least one clevis 3 equipped with a pair of stop screws 4 and corresponding flanged nuts 5, a simple screw 6, adapted to constrain the tubular element 2 to a body T portion and a cap 7.

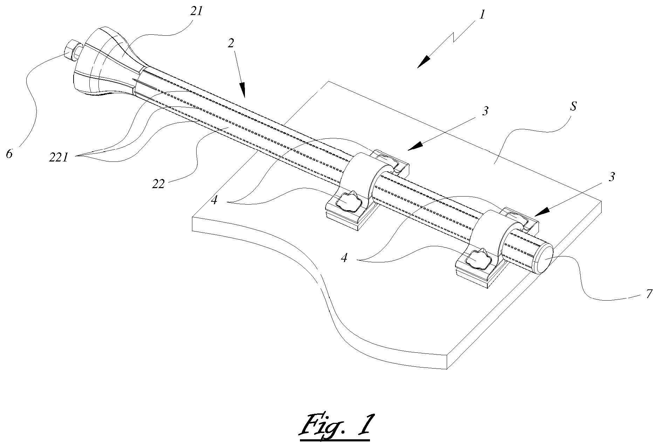

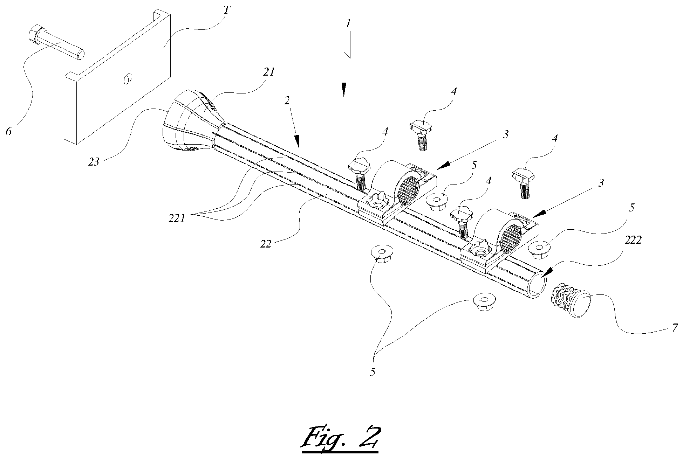

As illustrated in figures 1 and 2, the tubular element 2 is composed by an almost bell-shaped base 21, from which a tube 22 provided with a set of toothed rows 221, the latter being equidistant and orderly disposed along the generatrices of the tube 22, of the tubular element 2 extends.

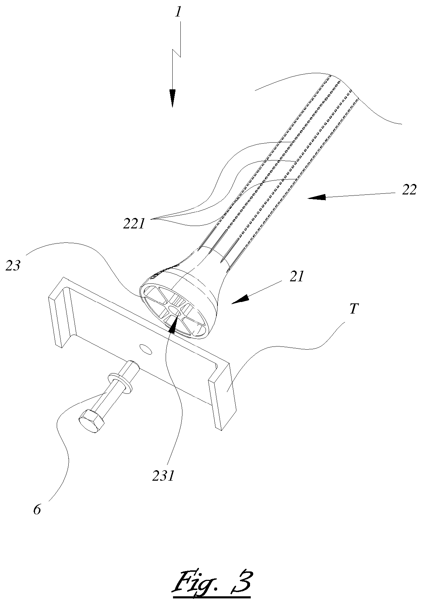

As illustrated in figures 2 and 3, the flat surface 23 of the base 21 is centrally provided with a threaded blind hole 231, adapted to accommodate a simple screw 6, suitable to reversibly constrain the tubular element 2 on a portion of a vehicle body T.

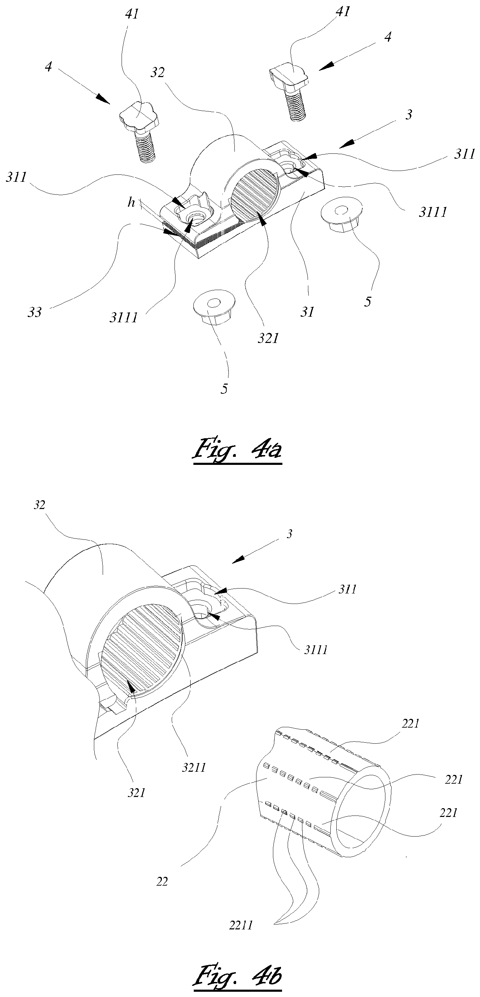

As illustrated in figures 4 a, b, the clevis 3 is geometrically composed by a board 31, surmounted by an annular element 32 and the latter being internally provided with a partially grooved profile 321. Said partially grooved profile ends on an end with an open cylindrical profile 3211. Said partially grooved profile 321 ends on an end with an open cylindrical profile 3211.

Said open cylindrical profile 3211 has a width suitable to engage the cracks generated between a tooth 2211 and the next one of the toothed rows 221 of the tubular element 2.

A pair of prismatic chutes 311 of a merely quadrangular geometry and centrally provided with a through hole 3111 are performed at the side ends of the board 31 and on the side of the annular element 32.

Said prismatic chutes 311 of the clevis 3 are suitable to accommodate the complementary geometry of the shaped heads 41 of the stop screws 4 in order to contribute, with said coupling, to form a constraint on the rotation for said stop screws 4.

Such stop screws 4 have threaded ends, protruding below the board 31 of the clevis 3, in order to constrain the latter, by flanged nuts 5, to the surface S of a general accessory as illustrated in figure 1.

Said board 31 is constructed such that there is a flat transverse cut 33 of a given thickness h and such to intercept a generatrix of the annular element 32 on only one side with respect to the annular element 32.

The flat transverse cut 33 has the function of giving an open geometry to the annular element 32, in order to give it an elastic behaviour as a function of the variation of the thickness h. In more detail, a reduction in thickness h, imposed by an external force, allows the partially grooved profile 321 to rigidly clamp the tubular element 2 inside the annular element 32 of the clevis 3.

From what has been discussed above, it should be noted that the condition of constraining between the tubular element 2 and the clevis 3 is ensured by three concomitant conditions, the first consisting of the geometric engagement of the toothed rows 221 of the tubular element 2 inside the partially grooved profile 321 of the annular element 32, in order to avoid mutual rotation movements between the tubular element 2 and the clevis 3, the second condition is instead due to the elastic compression the annular element 32 performs on the tubular element 2, due to the clamping of one of the stop screws 4 with its corresponding flanged nut 5, the third condition occurs as a result of the engagement of the open cylindrical profile 3211 with the respective cracks between the teeth 2211 of the toothed rows 221 of the tubular element 2. The second and the third conditions perform the axial block of the tubular element 2 with respect to the clevis 3.

In more detail, the stop screw 4 placed at the flat transverse cut 33, which has the function of contributing, during the action of its clamping, to reduce the thickness h of the flat transverse cut 33, consequently allowing the annular element 32 to clamp the tubular element therein 2.

Both for aesthetic reasons and to avoid that the tubular element 2 accumulates undesired deposits of any kind therein, once assembling operations are completed, a quick-release type cap 7 is constrained at the free and hollow end 222 of the tubular element 2.

## Claims

1. Device suitable to fix accessories to the chassis of heavy vehicles by a toothed tube and at least one clevis (3), consisting of a tubular element (2), and at least one clevis (3) equipped with a pair of stop screws (4) and corresponding flanged nuts (5) and a simple screw (6), the clevis (3) being composed by a board (31), surmounted by an annular element (32), the board (31) being provided with a flat transverse cut (33), **characterized in that**:
- The tubular element (2) is provided with a set of equidistant and orderly disposed toothed rows (221),
- The annular element (32) is internally provided with a partially grooved profile (321), and
- The flat transverse cut (33) reaches the partially grooved profile (321), and is on only one side with respect to the annular element (32).

2. Device suitable to fix accessories to the chassis of heavy vehicles by a toothed tube and at least one clevis (3), according to claim 1, **characterized in that** a pair of prismatic chutes (311) of an almost quadrangular shape and centrally provided with a through hole (3111) are performed at the side ends of the board (31) and on the side of the annular element (32).

3. Device suitable to fix accessories to the chassis of heavy vehicles by a toothed tube and at least one clevis (3), according to the preceding claims, **characterized in that** the prismatic chutes (311) of the clevis (3) are made according to any geometry complementary to the shaped heads (41) of the stop screws (4).

4. Device suitable to fix accessories to the chassis of heavy vehicles by a toothed tube and at least one clevis (3), according to the preceding claims, **characterized in that** the flat transverse cut (33) has a thickness (h) which is reduced as a function of the clamping performed on the stop screw (4) placed at the flat transverse cut (33) and the corresponding flanged nut (5) thereof.

5. Device suitable to fix accessories to the chassis of heavy vehicles by a toothed tube and at least one clevis (3), according to the preceding claims, **characterized in that** the tubular element (2) is composed by a bell-shaped base (21), from which a tube (22) extends.

6. Device suitable to fix accessories to the chassis of heavy vehicles by a toothed tube and at least one clevis (3), according to the preceding claims, **characterized in that** the set of toothed rows (221) of the tubular element (2) are equidistant and orderly disposed along the generatrices of the tube (22).

7. Device suitable to fix accessories to the chassis of heavy vehicles by a toothed tube and at least one clevis (3), according to the preceding claims, **characterized in that** the partially grooved profile (331) of the annular element (32) is made so as to be suitable to frictionally engage the toothed rows (221) of the tubular element (2).

8. Device suitable to fix accessories to the chassis of heavy vehicles by a toothed tube and at least one clevis (3), according to the preceding claims, **characterized in that** the partially grooved profile (321) has at its end an open cylindrical profile (3211) which annularly engages in the cracks between two consecutive teeth (2211) of a toothed row (221) of the tubular element (2).

9. Device suitable to fix accessories to the chassis of heavy vehicles by a toothed tube and at least one clevis (3), according to the preceding claims, **characterized in that** a quick-release type cap (7) is constrained at the free and hollow end (222) of the tubular element (2).

10. Device suitable to fix accessories to the chassis of heavy vehicles by a toothed tube and at least one clevis (3), according to the preceding claims, **characterized by** being made of an eco-friendly material.

11. Device suitable to fix accessories to the chassis of heavy vehicles by a toothed tube and at least one clevis (3), according to the preceding claims, **characterized by** being made of fiberglass reinforced nylon.

## Patentansprüche

1. Vorrichtung, die zur Befestigung von Zubehörteilen am Chassis von Schwerfahrzeugen durch ein gezahntes Rohr und mindestens einen Gabelkopf (3) geeignet ist, bestehend aus einem rohrförmigen Element (2) und mindestens einem Gabelkopf (3), der mit einem Paar Anschlagschrauben (4) und entsprechenden Bundmuttern (5) ausgestattet ist, und einer einfachen Schraube (6), wobei der Gabelkopf (3) aus einer Platte (31) besteht, die von einem ringförmigen Element (32) überragt wird, wobei die Platte (31) mit einem flachen, quer verlaufenden Einschnitt (33) versehen ist, **dadurch gekennzeichnet, dass**:
- das rohrförmige Element (2) mit einem Satz von gleichmäßig beabstandeten und regelmäßig angeordneten Zahnreihen (221) versehen ist,
- das ringförmige Element (32) innen mit einem teilweise gerillten Profil (321) versehen ist, und
- der flache, quer verlaufende Einschnitt (33) bis zum teilweise gerillten Profil (321) reicht und sich nur auf einer Seite in Bezug auf das ringförmige Element (32) befindet.

2. Vorrichtung, die zur Befestigung von Zubehörteilen am Chassis von Schwerfahrzeugen durch ein gezahntes Rohr und mindestens einen Gabelkopf (3) geeignet ist, nach Anspruch 1, **dadurch gekennzeichnet, dass** an den seitlichen Enden der Platte (31) und an der Seite des ringförmigen Elements (32) ein Paar prismatischer Senkungen (311) mit nahezu viereckiger Form, die mittig mit einer Durchgangsbohrung (3111) versehen sind, ausgeführt sind.

3. Vorrichtung, die zur Befestigung von Zubehörteilen am Chassis von Schwerfahrzeugen durch ein gezahntes Rohr und mindestens einen Gabelkopf (3) geeignet ist, nach den vorhergehenden Ansprüchen, **dadurch gekennzeichnet, dass** die prismatischen Senkungen (311) des Gabelkopfs (3) entsprechend einer Geometrie hergestellt sind, die zu den geformten Köpfen (41) der Anschlagschrauben (4) komplementär ist.

4. Vorrichtung, die zur Befestigung von Zubehörteilen am Chassis von Schwerfahrzeugen durch ein gezahntes Rohr und mindestens einen Gabelkopf (3) geeignet ist, nach den vorhergehenden Ansprüchen, **dadurch gekennzeichnet, dass** der flache, quer verlaufende Einschnitt (33) eine Dicke (h) aufweist, die in Abhängigkeit von der Klemmkraft, die auf die an dem flachen, quer verlaufenden Einschnitt (33) platzierte Anschlagschraube (4) und die entsprechende Bundmutter (5) ausgeübt wird, abnimmt.

5. Vorrichtung, die zur Befestigung von Zubehörteilen am Chassis von Schwerfahrzeugen durch ein gezahntes Rohr und mindestens einen Gabelkopf (3) geeignet ist, nach den vorhergehenden Ansprüchen, **dadurch gekennzeichnet, dass** das rohrförmige Element (2) aus einer glockenförmigen Basis (21) besteht, aus der sich ein Rohr (22) erstreckt.

6. Vorrichtung, die zur Befestigung von Zubehörteilen am Chassis von Schwerfahrzeugen durch ein gezahntes Rohr und mindestens einen Gabelkopf (3) geeignet ist, nach den vorhergehenden Ansprüchen, **dadurch gekennzeichnet, dass** der Satz von Zahnreihen (221) des rohrförmigen Elements (2) gleichmäßig beabstandet und regelmäßig entlang der Mantellinien des Rohrs (22) angeordnet ist.

7. Vorrichtung, die zur Befestigung von Zubehörteilen am Chassis von Schwerfahrzeugen durch ein gezahntes Rohr und mindestens einen Gabelkopf (3) geeignet ist, nach den vorhergehenden Ansprüchen, **dadurch gekennzeichnet, dass** das teilweise gerillte Profil (331) des ringförmigen Elements (32) derart ausgebildet ist, dass es zum reibschlüssigen Eingriff mit den Zahnreihen (221) des rohrförmigen Elements (2) geeignet ist.

8. Vorrichtung, die zur Befestigung von Zubehörteilen am Chassis von Schwerfahrzeugen durch ein gezahntes Rohr und mindestens einen Gabelkopf (3) geeignet ist, nach den vorhergehenden Ansprüchen, **dadurch gekennzeichnet, dass** das teilweise gerillte Profil (321) an seinem Ende ein offenes zylindrisches Profil (3211) aufweist, das ringförmig in die Spalten zwischen zwei aufeinanderfolgenden Zähnen (2211) einer Zahnreihe (221) des rohrförmigen Elements (2) eingreift.

9. Vorrichtung, die zur Befestigung von Zubehörteilen am Chassis von Schwerfahrzeugen durch ein gezahntes Rohr und mindestens einen Gabelkopf (3) geeignet ist, nach den vorhergehenden Ansprüchen, **dadurch gekennzeichnet, dass** eine Schnellverschlusskappe (7) an dem freien und hohlen Ende (222) des rohrförmigen Elements (2) befestigt ist.

10. Vorrichtung, die zur Befestigung von Zubehörteilen am Chassis von Schwerfahrzeugen durch ein gezahntes Rohr und mindestens einen Gabelkopf (3) geeignet ist, nach den vorhergehenden Ansprüchen, **dadurch gekennzeichnet, dass** sie aus einem umweltfreundlichen Material hergestellt ist.

11. Vorrichtung, die zur Befestigung von Zubehörteilen am Chassis von Schwerfahrzeugen durch ein gezahntes Rohr und mindestens einen Gabelkopf (3) geeignet ist, nach den vorhergehenden Ansprüchen, **dadurch gekennzeichnet, dass** sie aus glasfaserverstärktem Nylon hergestellt ist.

## Revendications

1. Dispositif adapté pour fixer des accessoires au châssis de véhicules lourds par un tube denté et au moins une chape (3), constitué d'un élément tubulaire (2), et d'au moins une chape (3) équipée d'une paire de vis de butée (4) et d'écrous à brides correspondants (5) et d'une simple vis (6), la chape (3) étant composée d'une platine (31), surmontée d'un élément annulaire (32), la platine (31) étant munie d'une coupe transversale à plat (33), **caractérisé en ce que** :
- l'élément tubulaire (2) est pourvu d'un ensemble de rangées dentées équidistantes et disposées de manière ordonnée (221),
- l'élément annulaire (32) est pourvu intérieurement d'un profil partiellement rainuré (321), et
- la coupe transversale à plat (33) atteint le profil partiellement rainuré (321) et se trouve d'un seul côté par rapport à l'élément annulaire (32).

2. Dispositif adapté pour fixer des accessoires au châssis de véhicules lourds par un tube denté et au moins une chape (3), selon la revendication 1, **caractérisé en ce qu'**une paire de goulottes prismatiques (311) de forme presque quadrangulaire et pourvues centralement d'un trou traversant (3111) sont réalisées aux extrémités latérales de la platine (31) et sur le côté de l'élément annulaire (32).

3. Dispositif adapté pour fixer des accessoires au châssis de véhicules lourds par un tube denté et au moins une chape (3), selon les revendications précédentes, **caractérisé en ce que** les goulottes prismatiques (311) de la chape (3) sont réalisées selon toute géométrie complémentaire des têtes profilées (41) des vis de butée (4).

4. Dispositif adapté pour fixer des accessoires au châssis de véhicules lourds par un tube denté et au moins une chape (3), selon les revendications précédentes, **caractérisé en ce que** la coupe transversale à plat (33) a une épaisseur (h) qui est réduite en fonction du serrage effectué sur la vis de butée (4) placée au niveau de la coupe transversale à plat (33) et de l'écrou à bride correspondant (5) de celle-ci.

5. Dispositif adapté pour fixer des accessoires au châssis de véhicules lourds par un tube denté et au moins une chape (3), selon les revendications précédentes, **caractérisé en ce que** l'élément tubulaire (2) est composé d'une base en forme de cloche (21), à partir de laquelle un tube (22) s'étend.

6. Dispositif adapté pour fixer des accessoires au châssis de véhicules lourds par un tube denté et au moins une chape (3), selon les revendications précédentes, **caractérisé en ce que** l'ensemble des rangées dentées (221) de l'élément tubulaire (2) sont équidistantes et disposées de manière ordonnée le long des génératrices du tube (22).

7. Dispositif adapté pour fixer des accessoires au châssis de véhicules lourds par un tube denté et au moins une chape (3), selon les revendications précédentes, **caractérisé en ce que** le profil partiellement rainuré (331) de l'élément annulaire (32) est réalisé de manière à être adapté pour venir en prise par frottement avec les rangées dentées (221) de l'élément tubulaire (2).

8. Dispositif adapté pour fixer des accessoires au châssis de véhicules lourds par un tube denté et au moins une chape (3), selon les revendications précédentes, **caractérisé en ce que** le profil partiellement rainuré (321) présente à son extrémité un profil cylindrique ouvert (3211) qui s'engage annulairement dans les fissures entre deux dents consécutives (2211) d'une rangée dentée (221) de l'élément tubulaire (2).

9. Dispositif adapté pour fixer des accessoires au châssis de véhicules lourds par un tube denté et au moins une chape (3), selon les revendications précédentes, **caractérisé en ce qu'**un capuchon de type à dégagement rapide (7) est retenu à l'extrémité libre et creuse (222) de l'élément tubulaire (2).

10. Dispositif adapté pour fixer des accessoires au châssis de véhicules lourds par un tube denté et au moins une chape (3), selon les revendications précédentes, **caractérisé en ce qu'**il est fabriqué en un matériau respectueux de l'environnement.

11. Dispositif adapté pour fixer des accessoires au châssis de véhicules lourds par un tube denté et au moins une chape (3), selon les revendications précédentes, **caractérisé en ce qu'**il est fabriqué en nylon renforcé de fibre de verre.
